# EUROPEAN PATENT SPECIFICATION

(11) **EP 1 571 035 B1**
(45) Date of publication and mention of the grant of the patent: **27.09.2006**
(21) Application number: 04425135.3
(22) Date of filing: 02.03.2004
(51) Int. Cl.: B60N 2/30, B60N 2/48

(54) **Adjustable vehicle seat, and vehicle equipped with such an adjustable seat**
Verstellbarer Fahrzeugsitz und Kraftfahrzeug mit einem solchen verstellbarem Sitz
Siège réglable de véhicule et véhicule pourvu d'un tel siège réglable

(43) Date of publication of application: 07.09.2005
(73) Proprietor: C.R.F. Società Consortile per Azioni, 10043 Orbassano (Torino) (IT)
(72) Inventor: Masoero, Giorgio c/o C.R.F Società Consotile, 10043 Orbassano (IT)
(74) Representative: Cerbaro, Elena

(56) References cited:
- EP-A- 0 562 937
- EP-A- 0 736 411
- EP-A- 1 099 595
- DE-A- 19 628 699
- FR-A- 1 586 887
- FR-A- 2 838 689
- GB-A- 2 324 721
- US-A- 4 106 809

## Description

The present invention relates to an adjustable vehicle seat.

As is known, depending on circumstances, some vehicle users require maximum passenger space, while others require a relatively large luggage compartment. Consequently, the space at the rear of the vehicle must be exploited to maximum advantage, and in particular to adapt the vehicle to specific user requirements.

Some vehicles are equipped with a drop-down rear seat, which, when necessary, can be rotated into a position in which the backrest and seat portion of the seat are folded one on top of the other and normally stowed against the front seats to enlarge the luggage compartment.

When stowed against the front seats, known drop-down rear seats of the above type tend to impair adjustment of the front seats, and are unsatisfactory in terms of luggage retention.

EP 0736411 discloses a seat according to the preamble of claim 1 and comprising a backrest that can be mounted flush with a parcel shelf to delimit a space in communication to the luggage compartment.

It is an object of the present invention to provide an adjustable vehicle seat designed to provide a straightforward, low-cost solution to the above problems.

According to the present invention, there is provided an adjustable seat for a vehicle as defined in claim 1.

A non-limiting embodiment of the invention will be described by way of example with reference to the accompanying drawings, in which:
Figures 1 to 4 show schematic side views of a preferred embodiment of the adjustable vehicle seat according to the present invention, and a sequence of operations to adjust the seat;
Figure 5 shows a larger-scale view in perspective, with parts removed for clarity, of the Figure 1-4 seat;
Figures 6 to 9 are similar to, and show a variation of the adjustable seat in, Figures 1 to 4.

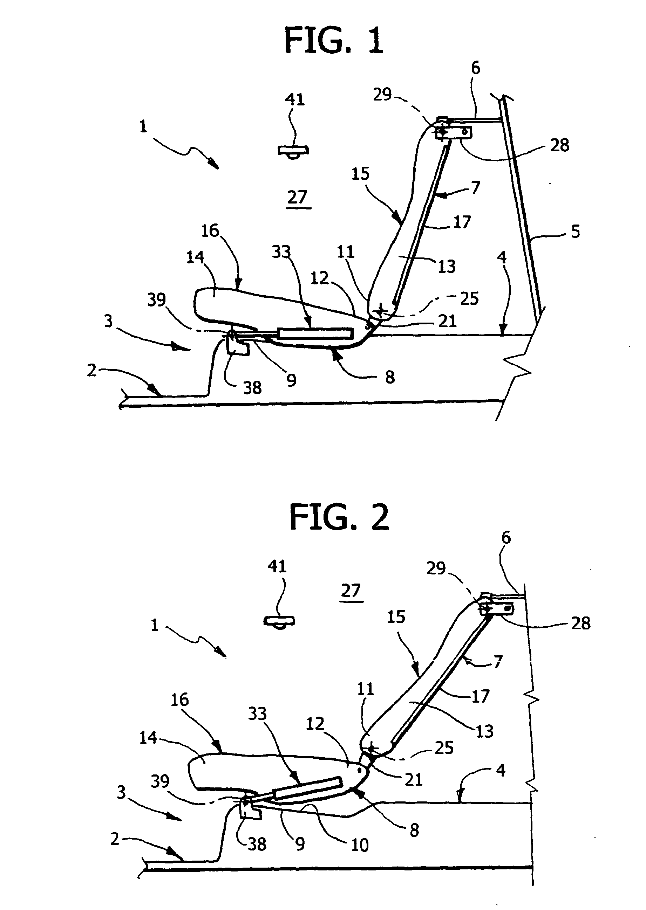

Number 1 in Figures 1 to 5 indicates an adjustable rear seat of a vehicle 2 (shown partly and schematically) comprising a passenger compartment 3, and a luggage compartment 4 behind seat 1. Luggage compartment 4 is closed at the rear by a door 5, is defined at the top by a substantially horizontal parcel shelf 6, and is extendable by adjusting seat 1.

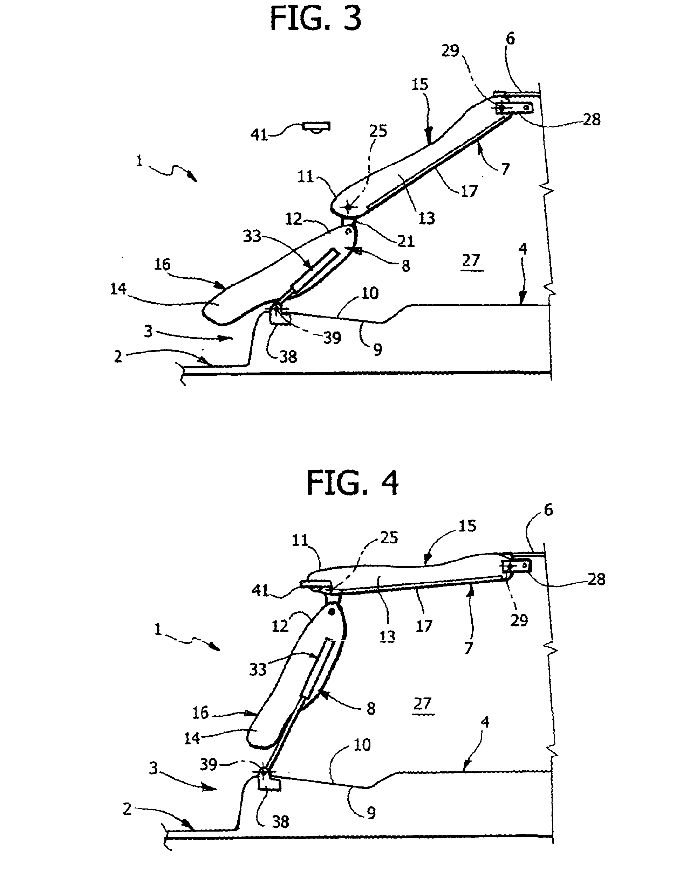

Seat 1 comprises a backrest 7 and a seat portion 8, and is movable between a first (Figure 1) and a second (Figure 4) operating configuration. In the first configuration, seat 1 defines accommodation in passenger compartment 3 for at least one rear passenger, backrest 7 defines the front of luggage compartment 4, and seat portion 8 rests on a wall 9 defining an extension of the loading bed of luggage compartment 4. In the second operating configuration, backrest 7 is substantially aligned with parcel shelf 6 to define the top of an additional compartment 10 formed over wall 9 frontwards of luggage compartment 4, and seat portion 8 defines the front of compartment 10. More specifically, backrest 7 and seat portion 8 comprise respective adjacent end portions 11, 12 closing compartment 10.

Backrest 7 and seat portion 8 comprise respective cushion bodies 13, 14 defining respective supporting surfaces 15, 16, which face each other in the first operating configuration, and face opposite ways in the second operating configuration, i.e. face the roof (not shown) and the front seats (not shown) of vehicle 2.

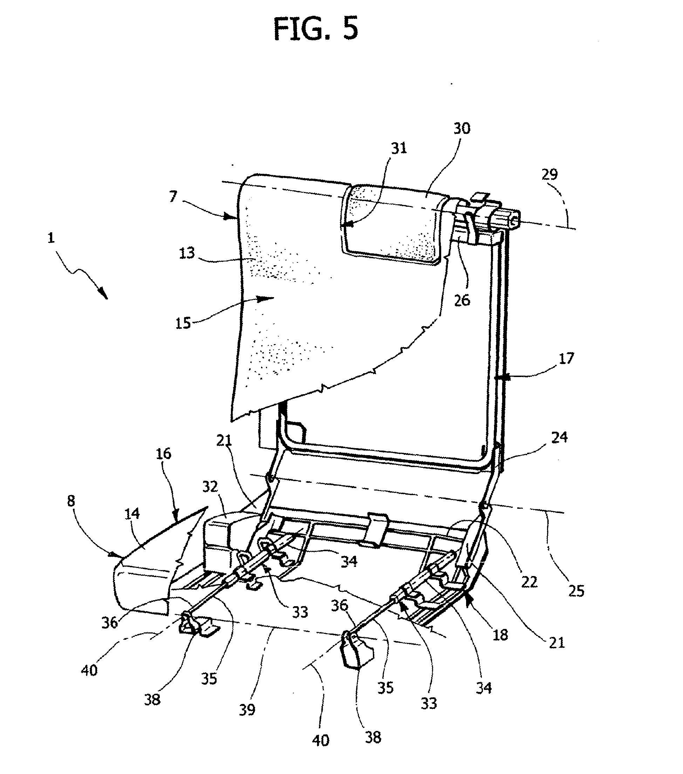

With reference to Figure 5, backrest 7 and seat portion 8 also comprise respective frames 17, 18, which support respective bodies 13, 14, and which are connected to each other by a pair of brackets 21 when moving between the first and second operating configuration. Brackets 21 are connected integrally to a rear end portion 22 of frame 18, project from body 14 and into body 13 through respective openings (not shown), and are hinged to a bottom end portion 24 of frame 17 to allow backrest 7 and seat portion 8 to rotate with respect to each other about a horizontal hinge axis 25 perpendicular to the travelling direction (not shown) of vehicle 2.

Frame 17 comprises a top end portion 26 connected to the side panel 27 of vehicle 2 by a lock device 28, which is releasable to recline backrest 7 about axis 25 onto surface 16.

Frame 17 is hinged to side panel 27 with the interposition of device 28 to rotate about a fixed axis 29, parallel to axis 25, when moving between said two operating configurations, and is fitted with a headrest 30 movable, in a direction perpendicular to axis 29, between a lowered rest position, in which it is housed completely inside a recess 31 in body 13 to avoid interfering with parcel shelf 6 when rotating about axis 29, and a raised operating position (not shown), in which it projects at least partly from recess 31 to define a support for a passenger's head.

With reference to Figure 5, seat portion 8 comprises an anchoring device 32 fitted to frame 18, and which releasably engages a stop (not shown) on wall 9 to retain seat portion 8 in the first operating configuration. Seat portion 8 also comprises two piston members 33, in turn comprising respective guide cylinders 34 fixed to frame 18, and respective rods 35, the ends 36 of which project from body 14 through respective openings (not shown) and are hinged to respective brackets 38 fixed to wall 9 to allow seat portion 8 to rotate about a fixed axis 39 of rotation, parallel to axis 25, when moving between said two operating configurations.

Rods 35 are connected to cylinders 34 to slide in directions 40 perpendicular to axes 25 and 39, and are pushed into an extracted position by respective elastic devices (not shown), e.g. springs or compressible fluid volumes, housed inside cylinders 34 and such as to move seat 1 into one of said two operating configurations when a dead centre position, in which seat portion 8 and backrest 7 are substantially aligned (Figure 3), is exceeded.

With reference to Figures 1 to 4, one of portions 11, 12 is fitted with a grip (not shown) which, once device 32 is released, is pulled manually to move seat 1 from the first to the second operating configuration. Over a first portion of the above movement (Figure 2), cylinders 34 move forwards with respect to rods 35 to guide seat portion 8 parallel to directions 40, while seat portion 8 and backrest 7 rotate about respective axes 39 and 29 into said dead centre position (Figure 3).

Once the dead centre position is exceeded, the elastic devices compressed inside piston members 33 expel rods 35 from cylinders 34, possibly in damped manner, to rotate seat portion 8 and backrest 7 further about axes 39, 29 until portion 11, travelling along its own trajectory, engages a retaining member 41 (shown schematically) fixed to side panel 27.

In one variation, seat 1 has no member 41, and is retained in the second operating configuration by the thrust exerted by piston members 33.

To return to the first operating configuration, seat 1 is released from member 41, if provided, and portions 11, 12 are pushed from passenger compartment 3 into said dead centre position, past which seat portion 8 is brought to rest on wall 9, along a trajectory substantially opposite to the one described above, by the elastic devices compressed inside piston members 33.

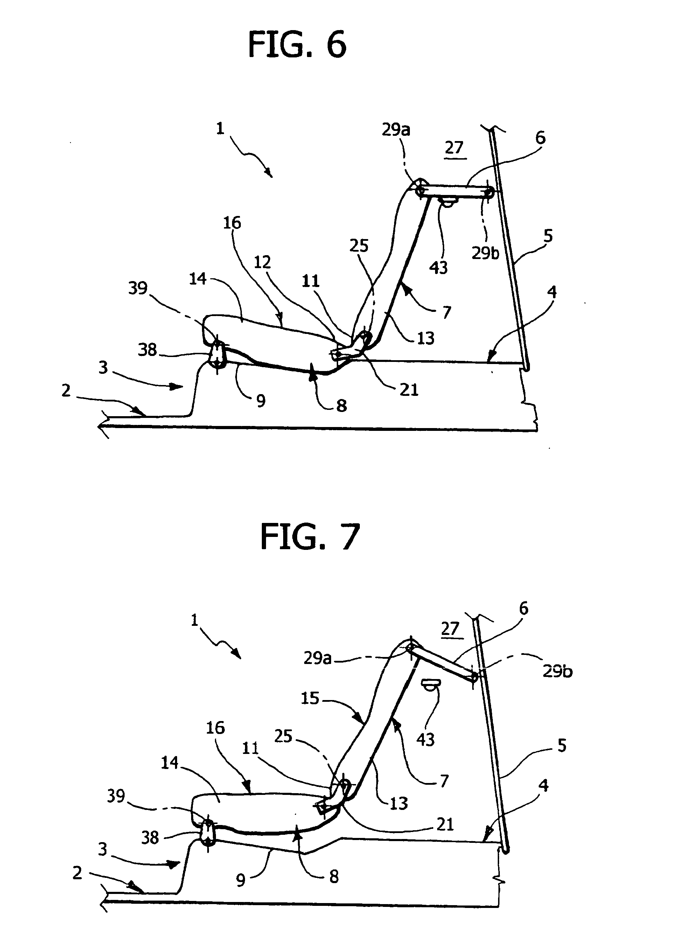

Figures 6 to 9 show a variation of seat 1, the component parts of which are indicated, where possible, using the same reference numbers as in Figures 1 to 5.

Unlike the Figure 1-5 solution, frame 18 has no piston members 33, and comprises a front end portion (not shown) hinged directly to brackets 38 about axis 39; and portion 26 is fitted to side panel 27 by parcel shelf 6, which rests on a supporting member 43 which substitutes for member 41. More specifically, parcel shelf 6 defines a connecting rod hinged at the front end to backrest 7 about a movable axis 29a parallel to axis 25, and at the rear end to side panel 27 about a fixed axis 29b parallel to axis 25.

Being connected by parcel shelf 6, backrest 7 is movable tangentially with respect to axis 29b when moving seat 1 between said two operating configurations, so that, once device 32 is released, portion 12 of seat portion 8, and therefore backrest 7, can be raised manually to rotate parcel shelf 6 about axis 29b and off member 43 (Figure 7).

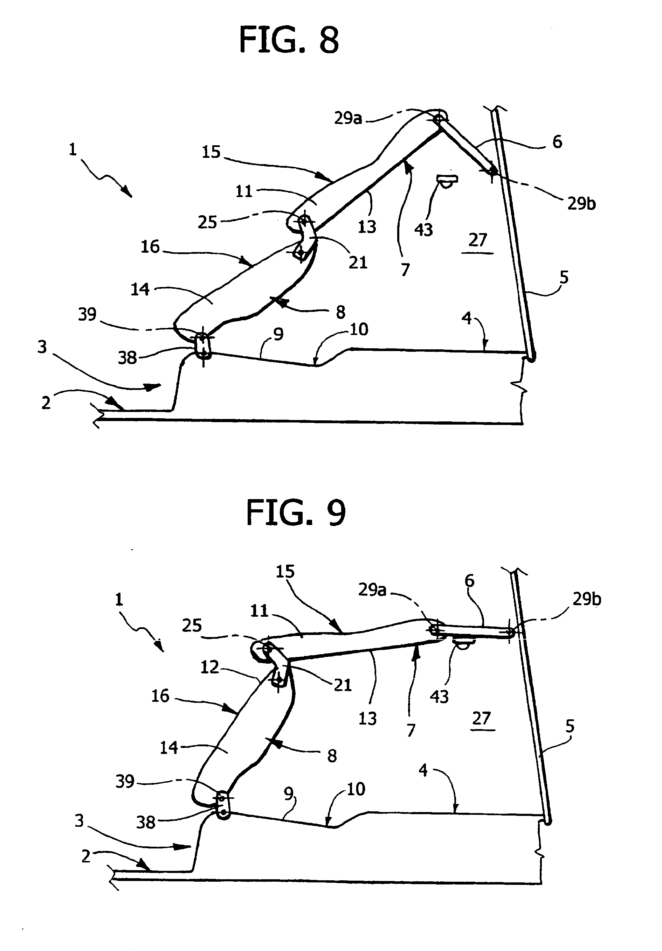

As portion 12 is rotated further forwards about axis 39, the dead centre position is reached in which backrest 7 and seat portion 8 are aligned (Figure 8), and past which backrest 7 continues along its rotation-translation trajectory, while the rotation direction of parcel shelf 6 about axis 29b is inverted until parcel shelf 6 and backrest 7 are eventually positioned horizontally, substantially aligned with each other, and supported by member 43.

As in the Figure 1-5 solution, backrest 7 is detachable from side panel 27, e.g. by releasing the rear end of parcel shelf 6 from side panel 27, and can be rotated about axis 25 and reclined on surface 16.

Seat 1 thus provides for exploiting the space inside vehicle 2 differently and to the best advantage according to specific user requirements - passenger accommodation or luggage transportation - and is perfectly functional in all operating conditions.

More specifically, seat 1 not only provides for rear passenger accommodation, but also for defining the front of compartment 10. That is, in the second operating configuration, seat 1 is adjacent on one side to parcel shelf 6, and on the other to wall 9, so as to fully enclose the space defined by luggage compartment 4 and additional compartment 10, conceal the content of the two compartments from the outside, and at the same time prevent luggage from sliding inside passenger compartment 3 when vehicle 2 is moving, e.g. in the event of an accident or sharp braking.

Besides closing off compartment 10 and so ensuring a high degree of safety when the vehicle is moving in the second operating configuration, the connection between seat portion 8 and backrest 7 is extremely straightforward, and requires no particular finishing elements to conceal brackets 21.

In the second operating configuration, seat 1 occupies little space and permits correct adjustment of the front seats. Finally, seat 1 is easy to move between the two operating configurations, on account of seat portion 8 and backrest 7, when so doing, remaining hinged to each other and connected to wall 9 and side panel 27. In particular, piston members 33 or parcel shelf 6 allow seat 1 an additional degree of freedom enabling displacement of seat portion 8 and backrest 7 while hinged to each other and to vehicle 2.

In the first operating configuration, device 32 provides for safe connection of seat 1 to wall 9, while headrest 30 is practical and compact by virtue of recess 31.

Clearly, changes may be made to seat 1 as described herein without, however, departing from the scope of the present invention.

In particular, seat 1 may be released from wall 9 or from side panel 27, or seat portion 8 and backrest 7 may be released, before moving seat 1 between the two operating configurations, and then locked back together in the desired operating configuration.

Said additional degree of freedom, i.e. the ability to translate perpendicularly to axes 39, 29 or 29b, may be provided by systems other than piston members 33 and parcel shelf 6, and possibly connected to portions of backrest 1 other than those described. For example, a sliding coupling may be provided between two adjacent portions forming part of seat portion 8, backrest 7, or parcel shelf 6; or a guide and slide system may be interposed between axis 39 and wall 9; or a guide and slide system may be associated with backrest 7 as opposed to seat portion 8; or a lever mechanism other than parcel shelf 6 may be provided, e.g. an articulated quadrilateral, possibly associated with seat portion 8 as opposed to backrest 7.

Backrest 7 and seat portion 8 may be divided into a right and left lateral element, or cover the whole width of vehicle 2 between side panels 27.

Finally, seat 1 may be anchored in the first operating configuration by members other than device 32, and/or may be rotated about axis 39 and stowed against the front seats after folding backrest 7 down onto surface 15.

## Claims

1. An adjustable seat (1) for a vehicle (2); the seat comprising:
a) a seat portion (8) and a backrest (7), which comprise respective end portions (11, 12) adjacent to each other and are movable between a first operative configuration, in which said seat portion (8) and said backrest (7) define accommodation for at least one passenger, and a second operative configuration, in which said seat portion (8) defines the front of a rear loading compartment (10) of said vehicle (2), and the backrest (7) defines the top of said loading compartment (10);
b) hinge means (21) keeping said end portions (11, 12) connected to each other when moving between said first and said second operative configuration and defining a horizontal hinge axis (25);
c) coupling means for hinging said backrest (7) and said seat portion (8) to a supporting structure (9, 27) of said vehicle (2) respectively about a first (29; 29b) and second (39) axis of rotation parallel to said hinge axis (25);
d) relative motion means (33; 6) allowing at least one portion of said backrest (7) or of said seat portion (8) to translate in a direction perpendicular to the relative axis of rotation (29, 39; 29b, 39) when moving between said first and said second operative configuration;
**characterised by** also comprising elastic means exerting such action as to move said backrest (7) and said seat portion (8) into said first or said second operative configuration when a dead centre position, in which said backrest (7) and said seat portion (8) are aligned with each other, is exceeded; said elastic means and said relative motion means defining part of the same member (33).

2. A seat as claimed in Claim 1, **characterized in that** said relative motion means comprise guide and slide means (33).

3. A seat as claimed in claim 2, **characterised in that** said guide and slide means (33) comprise at least one piston member (33) housing said elastic means and defining said same member.

4. A seat as claimed in Claim 2 or 3, **characterized in that** said guide and slide means (33) are associated with said seat portion (8).

5. A seat as claimed in Claim 4, **characterized in that** said seat portion (8) comprises a cushion body (14); and **in that** said guide and slide means (33) are interposed between said cushion body (14) and said second axis of rotation (39).

6. A seat as claimed in Claim 1, **characterized in that** said relative motion means comprise a connecting rod (6) hinged on one side to said supporting structure (27), and on the other side to said backrest (7) or said seat portion (8).

7. A seat as claimed in Claim 6, **characterized in that** said connecting rod (6) is associated with said backrest (7).

8. A seat as claimed in Claim 7, **characterized in that** said connecting rod is defined by a parcel shelf (6) covering a luggage compartment (4) of said vehicle (2); said backrest (7) being substantially aligned with and adjacent to said parcel shelf (6) in said second operative configuration.

9. A seat as claimed in any one of the foregoing Claims, **characterized in that** said seat portion (8) comprises a cushion body (14); and releasable anchoring means (32) for keeping said cushion body (14) connected to a supporting structure (9) of said vehicle (2) in said first operative configuration.

10. A seat as claimed in any one of the foregoing Claims, **characterized in that** said backrest (7) comprises a cushion body (13); and a headrest (30) which slides between a raised position, in which it projects with respect to said cushion body (13), and a lowered position, in which it is housed entirely inside a recess (31) in said cushion body (13).

11. A seat as claimed in any one of the foregoing Claims, **characterized in that** said coupling means (28; 6) are releasable from said supporting structure (27) to permit rotation of said backrest (7) about said hinge axis (25) onto said seat portion (8).

12. A vehicle having an adjustable rear seat as claims in any one of the foregoing Claims.

13. A vehicle as claimed in Claim 12, **characterized by** comprising a side panel (27) fitted with retaining means (41; 43) for maintaining said seat (1) in said second operative configuration.

14. A vehicle as claimed in Claim 13, **characterized in that** said retaining means (41) cooperate with a portion (11) of said seat (1).

15. A vehicle as claimed in Claim 14, **characterized in that** said retaining means (43) define a support for a parcel shelf (6) hinged to the top end of the backrest (7) of said seat (1).

## Patentansprüche

1. Verstellbarer Sitz (1) für ein Fahrzeug (2); wobei der Sitz aufweist:
a) einen Sitzbereich (8) und eine Rückenlehne (7), welche jeweilige zueinander benachbarte Endbereiche (11, 12) aufweisen und zwischen einer ersten Betriebskonfiguration, in der der Sitzbereich (8) und die Rückenlehne (7) eine Unterbringung für wenigstens einen Mitfahrer definieren, und einer zweiten Betriebskonfiguration beweglich sind, in der der Sitzbereich (8) die Vorderseite eines hinteren Laderaums (10) des Fahrzeugs (2) definiert, und die Rückenlehne (7) die Oberseite des Laderaums (10) definiert;
b) eine Gelenkeinrichtung (21), die die Endbereiche (11, 12) bei der Bewegung zwischen der ersten und zweiten Betriebskonfiguration miteinander verbunden hält und eine horizontale Gelenkachse (25) definiert;
c) eine Koppeleinrichtung zum gelenkigen Ankoppeln der Rückenlehne (7) und des Sitzbereichs (8) an eine Trägerstruktur (9, 27) des Fahrzeugs (2), jeweils um eine erste (29, 29b)/zweite (39) Drehachse parallel zu der Gelenkachse (25);
d) eine Relativbewegungseinrichtung (33; 6), die wenigstens einem Bereich der Rückenlehne (7) oder des Sitzbereichs (8) einen Versatz in eine Richtung senkrecht zu der relativen Drehachse (29, 39; 29b, 39) bei der Bewegung zwischen der ersten und der zweiten Betriebskonfiguration erlaubt;
**dadurch gekennzeichnet, daß** der Sitz ebenfalls eine federnde Einrichtung aufweist, die eine derartige Wirkung ausübt, daß die Rückenlehne (7) und der Sitzbereich (8) in die erste oder zweite Betriebskonfiguration bewegt werden, wenn eine Totpunktlage überschritten wird, in der die Rückenlehne (7) und der Sitzbereich (8) einander nach ausgerichtet sind, wobei die federnde Einrichtung und die Relativbewegungseinrichtung einen Anteil desselben Teils (33) definieren.

2. Sitz nach Anspruch 1, **dadurch gekennzeichnet, daß** die Relativbewegungseinrichtung eine Führungs- und Gleiteinrichtung (33) aufweist.

3. Sitz nach Anspruch 2, **dadurch gekennzeichnet, daß** die Führungs- und Gleiteinrichtung (33) wenigstens ein Kolbenteil (33) aufweist, welcher die federnde Einrichtung unterbringt und dieses selbe Teil definiert.

4. Sitz nach Anspruch 2 oder 3, **dadurch gekennzeichnet, daß** die Führungs- und Gleiteinrichtung (33) dem Sitzbereich (8) zugeordnet ist.

5. Sitz nach Anspruch 4, **dadurch gekennzeichnet, daß** der Sitzbereich (8) einen Kissenkörper (14) aufweist; und **dadurch**, daß die Führungs- und Gleiteinrichtung (33) zwischen dem Kissenkörper (14) und der zweiten Drehachse (39) zwischengesetzt ist.

6. Sitz nach Anspruch 1, **dadurch gekennzeichnet, daß** die Relativbewegungseinrichtung eine Verbindungsstange (6) aufweist, die an einer Seite an die Trägerstruktur (27) gelenkig gekoppelt ist, und an der anderen Seite an die Rückenlehne (7) oder den Sitzbereich (8) gekoppelt ist.

7. Sitz nach Anspruch 6, **dadurch gekennzeichnet, daß** die Verbindungsstange (6) der Rückenlehne (7) zugeordnet ist.

8. Sitz nach Anspruch 7, **dadurch gekennzeichnet, daß** die Verbindungsstange durch eine Hutablage (6) definiert ist, die einen Gepäckraum (4) des Fahrzeugs (2) abdeckt; wobei die Rückenlehne (7) in der zweiten Betriebskonfiguration im wesentlichen nach und benachbart zu der Hutablage (6) ausgerichtet ist.

9. Sitz nach einem der vorhergehenden Ansprüche, **dadurch gekennzeichnet, daß** der Sitzbereich (8) einen Kissenkörper (14); und eine lösbare Verankerungseinrichtung (32) aufweist, um den mit einer Trägerstruktur (9) des Fahrzeugs (2) verbundenen Kissenkörper (14) in der ersten Betriebskonfiguration zu halten.

10. Sitz nach einem der vorhergehenden Ansprüche, **dadurch gekennzeichnet, daß** die Rückenlehne (7) einen Kissenkörper (13); und eine Kopfstütze (30) aufweist, welche zwischen einer abstehenden Stellung, in der sie bezüglich des Kissenkörpers (13) vorragt, und einer abgesenkten Stellung gleiten kann, in der sie vollständig innerhalb einer Ausnehmung (31) in dem Kissenkörper (13) untergebracht ist.

11. Sitz nach einem der vorhergehenden Ansprüche, **dadurch gekennzeichnet, daß** die Koppeleinrichtung (28; 6) von der Trägerstruktur (27) lösbar ist, um eine Drehung der Rückenlehne (7) um die Gelenkachse (25) auf den Sitzbereich (8) zu erlauben.

12. Fahrzeug mit einem nach einem der vorhergehenden Ansprüche beanspruchten verstellbaren Rücksitz.

13. Fahrzeug nach Anspruch 12, **gekennzeichnet durch** ein Seitenpaneel (27), das an eine Halteeinrichtung (41; 43) zur Aufrechterhaltung des Sitzes (1) in der zweiten Betriebskonfiguration angepaßt ist.

14. Fahrzeug nach Anspruch 13, **dadurch gekennzeichnet, daß** die Halteeinrichtung (41) mit einem Bereich (11) des Sitzes (1) zusammenwirkt.

15. Fahrzeug nach Anspruch 14, **dadurch gekennzeichnet, daß** die Halteeinrichtung (43) einen Träger für eine Hutablage (6) definiert, welche an das obere Ende der Rückenlehne (7) des Sitzes (1) gelenkig gekoppelt ist.

## Revendications

1. Siège ajustable (1) pour un véhicule (2) ; le siège comprenant :
a) une partie d'assise (8) et un dossier (7), qui comprennent des parties d'extrémité respectives (11, 12) adjacentes l'une à l'autre et mobiles entre une première configuration de fonctionnement, dans laquelle ladite partie d'assise (8) et ledit dossier (7) définissent de l'espace pour au moins un passager, et une deuxième configuration de fonctionnement, dans laquelle ladite partie d'assise (8) définit l'avant d'un compartiment de chargement arrière (10) dudit véhicule (2), et le dossier (7) définit la partie supérieure dudit compartiment de chargement (10) ;
b) un moyen formant charnière (21) maintenant lesdites parties d'extrémité (11, 12) raccordées l'une à l'autre lors du passage de ladite première à ladite deuxième configuration de fonctionnement et vice versa et définissant un axe de charnière horizontal (25) ;
c) un moyen d'accouplement permettant d'articuler ledit dossier (7) et ladite partie d'assise (8) sur une structure de support (9, 27) dudit véhicule (2) respectivement autour d'un premier (29; 29b) et d'un deuxième (39) axes de rotation parallèles audit axe de charnière (25) ;
d) des moyens de déplacement relatif (33 ; 6) permettant à au moins une partie dudit dossier (7) ou de ladite partie d'assise (8) d'effectuer un mouvement de translation dans un sens perpendiculaire à l'axe de rotation relatif (29, 39 ; 29b, 39) lors du passage de la première à la deuxième configuration de fonctionnement et vice versa ;
**caractérisé en ce qu'**il comprend en outre un moyen élastique exerçant une action permettant de déplacer ledit dossier (7) et ladite partie d'assise (8) dans ladite première ou deuxième configuration de fonctionnement lorsqu'une position de point mort dans laquelle ledit dossier (7) et ladite partie d'assise (8) sont alignés, est dépassée ; ledit moyen élastique et ledit moyen de déplacement relatif définissant une partie dudit élément (33).

2. Siège selon la revendication 1, **caractérisé en ce que** ledit moyen de déplacement relatif comprend des moyens de guidage et de coulissement (33).

3. Siège selon la revendication 2, **caractérisé en ce que** lesdits moyens de guidage et de coulissement (33) comprennent au moins un élément de piston (33) recevant ledit moyen élastique et définissant ledit élément.

4. Siège selon la revendication 2 ou 3, **caractérisé en ce que** lesdits moyens de guidage et de coulissement (33) sont associés à ladite partie d'assise (8).

5. Siège selon la revendication 4, **caractérisé en ce que** ladite partie de siège (8) comprend un corps capitonné (14) ; et **en ce que** lesdits moyens de guidage et de coulissement (33) sont interposés entre ledit corps capitonné (14) et ledit deuxième axe de rotation (39).

6. Siège selon la revendication 1, **caractérisé en ce que** ledit moyen de mouvement relatif comprend une tige de raccordement (6) articulée sur un côté sur ladite structure de support (27) et sur l'autre côté sur ledit dossier (7) ou sur ladite partie d'assise (8).

7. Siège selon la revendication 6, **caractérisé en ce que** ladite tige de raccordement (6) est associée audit dossier (7).

8. Siège selon la revendication 7, **caractérisé en ce que** ladite tige de raccordement est définie par une plage arrière (6) recouvrant un coffre (4) dudit véhicule (2) ; ledit dossier (7) étant sensiblement aligné avec et adjacent à ladite plage arrière (6) dans ladite deuxième configuration de fonctionnement.

9. Siège selon l'une quelconque des revendications précédentes, **caractérisé en ce que** ladite partie d'assise (8) comprend un corps capitonné (14) ; et un moyen d'ancrage amovible (32) permettant de garder ledit corps capitonné (14) raccordé à une structure de support (9) dudit véhicule (2) dans ladite première configuration de fonctionnement.

10. Siège selon l'une quelconque des revendications précédentes, **caractérisé en ce que** ledit dossier (7) comprend un corps capitonné (13) ; et un appui-tête (30) qui coulisse entre une position élevée, dans laquelle il fait saillie par rapport audit corps capitonné (13), et une position abaissée, dans laquelle il est logé entièrement dans un évidement (31) dudit corps capitonné (13).

11. Siège selon l'une quelconque des revendications précédentes, **caractérisé en ce que** lesdits moyens de couplage (28 ; 6) peuvent être libérés de ladite structure de support (27) pour permettre la rotation dudit dossier (7) autour dudit axe de charnière (25) sur ladite partie d'assise (8).

12. Véhicule ayant un siège arrière ajustable selon l'une quelconque des revendications précédentes.

13. Véhicule selon la revendication 12, **caractérisé en ce qu'**il comprend un panneau latéral (27) doté de moyens de retenue (41 ; 43) pour maintenir ledit siège (1) dans ladite deuxième configuration de fonctionnement.

14. Véhicule selon la revendication 13, **caractérisé en ce que** ledit moyen de retenue (41) coopère avec une partie (11) dudit siège (1).

15. Véhicule selon la revendication 14, **caractérisé en ce que** ledit moyen de retenue (43) définit un support pour une plage arrière (16) articulée sur l'extrémité supérieure du dossier (7) dudit siège (1).
